# DEMANDE DE BREVET EUROPEEN

(11) **EP 4 751 957 A1**
(43) Date de publication de la demande: **03.06.2026**
(21) Numéro de dépôt: 25208749.9
(22) Date de dépôt: 15.10.2025
(51) Int. Cl.: B60K 1/04, B60L 50/64, B62D 21/15, B62D 25/20

(54) **SYSTÈME DE PROTECTION SOUS CAISSE POUR PROTÉGER UN PACK BATTERIE DE VÉHICULE**

(30) Priorité: 02.12.2024 FR 2413316
(71) Demandeur: AMPERE s.a.s., 92100 Boulougne-Billancourt (FR)
(72) Inventeur: Chaudoy, Victor, 78280 Guyancourt (FR); Sannier, Lucas, 78280 Guyancourt (FR); Tourret, Thierry, 78280 Guyancourt (FR)
(74) Mandataire: Renault Group

(57) **Abrégé**

Système de protection sous caisse, destiné à protéger un pack batterie (2) de véhicule électrique vis-à-vis d'impacts éventuels d'objets par le dessous du véhicule, le système de protection comprenant un premier rail (41) et un deuxième rail (42), les deux rails étant ouverts l'un vers l'autre formant ainsi une glissière selon la direction longitudinale (X), caractérisé en ce que le système de protection comprend une pluralité de panneaux de protection (5), agencés l'un à la suite de l'autre le long de la direction longitudinale (X), deux panneaux adjacents étant reliés entre eux par des moyens de liaison (7), chaque panneau de protection présentant une épaisseur (E5) le long de la direction verticale, une longueur (L5) correspondant généralement à la largeur du pack batterie, et une largeur (W5) comprise entre 15 cm et 60 cm, de préférence comprise entre 20 cm et 50 cm.

## Description

La présente invention se rapporte aux véhicules automobiles équipés d'une chaîne de traction électrique comprenant un pack batterie principal situé sous le plancher du véhicule.

Dans de tels véhicules automobiles, il est nécessaire d'apporter un certain degré de protection au pack batterie vis-à-vis des agressions mécaniques qui peuvent venir du dessous du véhicule, notamment lorsque le véhicule roule.

Par exemple, le dessous du véhicule peut recevoir des projections de petits cailloux ou même de petites pierres, qui le cas échéant possèdent une vitesse élevée donc une énergie cinétique conséquente.

La protection mécanique du dessous du pack batterie peut s'avérer aussi pertinente dans des situations de vie à vitesse nulle ou quasi nulle, e.g. manœuvre sur un plot de parking où objet qui vient se coincer sous le véhicule stationné.

Il est connu du document EP4216351 d'agencer une plaque de protection intégrale sous le pack batterie du véhicule pour répondre aux besoins susmentionnés. Si un impact se produit sur la plaque de protection intégrale et qu'il faut la changer, la pièce de rechange nécessaire présente des dimensions conséquentes qu'il est difficile de stocker et de manutentionner.

Par ailleurs, le contrôle technique réglementaire des véhicules équipés d'un tel pack batterie sous le plancher structurel du véhicule va inclure un critère de bon état du système de protection sous batterie. Il serait utile d'informer l'utilisateur de la survenance d'un choc sous le véhicule afin notamment de préparer le véhicule au contrôle technique et/ou de s'assurer qu'il peut continuer à être utilisé en toute sécurité.

C'est dans ce contexte que les inventeurs ont recherché à proposer une nouvelle solution pour réaliser la fonction de protection inférieure du pack batterie. Auxiliairement il est souhaité que la solution proposée puisse fournir une information sur la survenance d'un dommage, par exemple conséquence d'un heurt de cailloux ou de pierres.

A cet effet, il est proposé ici un système de protection sous caisse, destiné à protéger un pack batterie de véhicule électrique vis-à-vis d'impacts éventuels d'objets par le dessous du véhicule, le système de protection et le véhicule étant situés dans un repère spatial orthogonal comprenant une direction verticale, une direction longitudinale et une direction transversale, le système de protection comprenant un premier rail latéral et un deuxième rail latéral, les deux rails étant à distance et ouverts l'un vers l'autre, les deux rails formant ainsi une glissière selon la direction longitudinale ou selon la direction transversale, caractérisé en ce que le système de protection comprend une pluralité de panneaux de protection, reçus dans la glissière, et agencés l'un à la suite de l'autre le long le long de la glissière, deux panneaux adjacents étant reliés entre eux par des moyens de liaison.

On remarque que ce sont deux bords opposés de chaque panneau de protection qui sont reçus dans la glissière.

Grâce aux dispositions exposées ci-dessus, en remplaçant la plaque unique par plusieurs panneaux, les panneaux de protection présentent un facteur de forme favorable aux opérations logistique y compris stockage.

Par ailleurs, avantageusement, il est possible de remplacer un seul panneau de protection endommagé et de conserver les autres, ce qui permet de diminuer la consommation de matière et le coût de la réparation.

Avantageusement, la taille de chaque panneau de protection est inférieure à la taille de la plaque unique antérieure que les panneaux ont remplacée, ce qui est plus facile à stocker et manipuler.

Il faut remarquer que les objets impactants peuvent être des corps étrangers qui arrivent par le dessous du véhicule.

Selon une réalisation, il est prévu un espace de garde entre les panneaux de protection et la face inférieures du pack batterie. L'espace de garde présente une hauteur libre E2 de quelques millimètres, typiquement une dizaine de mm.

Selon une réalisation alternative, les panneaux de protection 5 peuvent être au toucher du dessous du pack batterie, sans intervalle libre.

Ainsi, un gnon ou un petit enfoncement d'une ou plusieurs panneau(x) de protection, par exemple provoqué par un impact de pierre, n'a pas de conséquence néfaste sur le pack batterie.

Toutefois, l'importance de la déformation du panneau peut être significative, et en vertu des critères de plus en plus sévères retenus par les contrôles techniques réglementaires, il peut être nécessaire de réparer voire remplacer le panneau ou les panneaux de protection endommagés. Nous verrons plus loin que l'invention prévoit optionnellement pour cela la présence de capteur(s) de choc dans les panneaux de protection afin de mettre à disposition une information de choc, ceci permettant d'éviter d'avoir à placer le véhicule sur un pont pour inspecter le dessous du véhicule.

Lorsque la glissière s'étend le long de la direction longitudinale X, les panneaux de protection sont agencés l'un à la suite de l'autre le long la direction longitudinale.

Selon une réalisation, chaque panneau de protection présente une épaisseur le long de la direction verticale, une longueur correspondant généralement à la largeur du pack batterie, et une largeur comprise entre 15 cm et 60 cm, de préférence entre 20 cm et 50 cm

En pratique, chaque panneau de protection présente deux petites dimensions et une seule grande dimension (la longueur). Ce facteur de forme est favorable à un stockage efficace en termes d'espace occupé.

Lorsque la glissière s'étend le long de la direction longitudinale X, la longueur de chaque panneau correspond généralement à la largeur du pack batterie, les panneaux pouvant coulisser le long de la direction longitudinale. Toutefois, il n'est pas exclu que la glissière s'étende le long de la direction transversale Y, avec alors une direction de coulissement des panneaux dans la glissière perpendiculairement à la direction longitudinale du véhicule.

Selon une réalisation, la longueur de panneau est comprise entre 100 cm et 200 cm. Selon une réalisation typique, la longueur de panneau sera comprise de préférence comprise entre 120 cm et 180 cm.

Ceci convient pour couvrir correctement un pack batterie qui s'étend quasiment sur toute la largeur du véhicule. A fortiori, cela suffit aussi même si la largeur du pack batterie est substantiellement inférieure à la largeur du véhicule.

Selon une réalisation, les moyens de liaison peuvent être formés par des bords bouvetés. Autrement dit, toute forme de bouvetage qui puisse former un moyen de liaison entre les tranches de deux panneaux adjacents peut être utilisé dans le cadre de la présente invention.

On forme ainsi un assemblage par accouplement de formes généralement complémentaires.

Selon une réalisation, les moyens de liaison sont formés par une section femelle sur l'une des tranches longitudinales du panneau de protection et par une section mâle sur l'autre des tranches longitudinales du panneau de protection. La section mâle vient s'insérer dans la section femelle.

Avantageusement, une telle solution est simple à mettre en œuvre et intuitive pour les opérateurs de maintenance en garage qui peuvent être amenés à démonter le système de protection et à le remonter ensuite. Les formes respectives, mâle et femelle, sont facilement reconnaissable et forment un système d'assemblage intuitif.

Selon une solution alternative, il peut être prévu des éléments d'accroche mutuels des panneaux, Par exemple des pions sapin, voire une baguette avec section en H. Autrement dit, les formes complémentaires sur les tranches longues des panneaux (bouvetage ou équivalent) sont une solution préférée mais pas exclusive au sens de la présente invention. De même, un système de tuilage entre les panneaux adjacents n'est pas à exclure.

Selon une réalisation, au moins un panneau de protection contient un capteur apte à détecter un choc d'une intensité supérieure à un seuil prédéterminé.

Avantageusement, une information est mise à disposition pour un utilisateur, que ce soit le conducteur, le personnel de maintenance, le propriétaire ou le gestionnaire de flotte. Ceci permet de prévoir une inspection en vue d'une réparation ou d'une présentation à un contrôle technique réglementaire.

Il faut remarquer que le capteur de choc peut être un capteur capacitif, un capteur piézo-résistif, ou tout autre type de capteur capable de détecter soit une accélération soit une déformation dans le sens de l'épaisseur du panneau.

Selon une réalisation, chaque panneau de protection équipé d'un capteur comprend au moins un moyen de connexion électrique, avec au moins 2 voies.

Selon une première possibilité, il est prévu au moins un connecteur spécifique sur chaque panneau reliant directement deux panneaux adjacents pour former un circuit général en guirlande.

Selon une seconde possibilité, les moyens de connexion électrique utilisent les rails latéraux, avec un élément conducteur en fond de gorge qui est contacté par un patin frottant de la tranche de panneau. Les panneaux sont alors alimentés électriquement en mode parallèle. Dans cette configuration, même si un panneau de protection souffre d'une rupture grave affectant notamment son circuit électrique, les panneaux voisins continuent d'être alimentés électriquement.

Selon une réalisation, le capteur de choc comprend un circuit capable de transmettre des messages par ondes électromagnétiques vers une unité de réception ; on peut utiliser un système de réseau local comme le Wifi^{™} ou le Bluetooth^{™} pour supporter la communication sans fil.

Selon une autre solution alternative, il peut être prévu une troisième voie électrique en filaire par laquelle transitent des signaux représentatifs des informations que les capteurs de choc mettent à disposition.

Selon une réalisation, au moins un des deux rails comprend un support inférieur déplaçable (e.g. une portion de lèvre inférieure) pour laisser un passage vers le bas afin de pouvoir insérer ou retirer un panneau de protection.

Moyennant l'ouverture du support inférieur déplaçable, on peut retirer au moins un panneau par le dessous et ensuite on peut faire coulisser chacun des autres panneaux jusqu'à cette position pour les retirer à leur tour, un par un. Cette solution permet d'éviter d'avoir à réserver un large passage libre à une extrémité longitudinale, avant ou arrière, du système de protection.

Selon une première possibilité, le support inférieur déplaçable est monté à pivotement grâce à une charnière.

Selon une seconde possibilité, le support inférieur déplaçable est tout simplement démontable et remontable.

En pratique, du côté du support inférieur déplaçable effacé, on abaisse un côté du panneau de protection puis on dégage le panneau de l'autre rail pour pouvoir l'ôter complètement par le bas.

On remarque qu'il n'est pas exclu que chacun des deux rails comprennent un support inférieur déplaçable, auquel cas la glissière peut être ouverte des deux côtés en Y et on peut extraire le panneau en le faisant pivoter seulement autour de la direction transversale Y.

Selon une réalisation, les panneaux de protection sont fabriqués en composite avec une feuille en acier et une couche de polymère (e.g. polypropylène ou polyéthylène).

De préférence, la feuille d'acier est placée dessous et dirigée vers le bas, elle fait face à la route et aux impacts éventuels, la couche de polymère est dirigée à l'inverse vers le pack batterie. La couche de polymère contribue à la rigidité structurelle souhaitée visant à limiter les phénomènes de flèche et éviter les vibrations et les bruits.

Cette solution composite représente un bon compromis performance mécanique, légèreté, durabilité, résistance à la fatigue et coût matière modéré.

Selon une réalisation, les premier et deuxième rails latéraux sont fixés à un ou plusieurs éléments structurels du véhicule. On peut ainsi démonter les rails latéraux sans toucher au pack batterie.

Selon une réalisation, il est prévu à une première extrémité longitudinale de la glissière une première butée fixe pour stopper la translation longitudinale d'un premier panneau de protection, et il est prévu à l'autre extrémité longitudinale de la glissière, une deuxième butée, fixe ou amovible, qui permet de stopper la translation longitudinale d'un dernier panneau de protection, lorsque tous les panneaux nécessaires sont en place.

Moyennant quoi, on immobilise la pluralité des panneaux de protection selon leur mouvement de translation dans la direction longitudinale, en encadrant les extrémités longitudinales.

Selon une réalisation, chaque panneau de protection est fixé individuellement aux rails latéraux. La fixation peut être réalisée par des vis auto-foreuses.

La présente invention vise aussi un ensemble comprenant un pack batterie comprenant un carter et un système de protection tel que décrit précédemment, dans lequel le premier rail latéral et le deuxième rail latéral sont fixés au carter du pack batterie.

La présente invention vise aussi un véhicule automobile, comprenant un pack batterie et un système de protection tel que décrit précédemment.

L'invention sera davantage détaillée par la description de modes de réalisation non limitatifs, et sur la base des figures annexées illustrant des variantes de l'invention, dans lesquelles :
- [Fig.1] représente schématiquement en vue de profil un véhicule électrique avec un système de protection selon la présente invention ;
- [Fig.2] représente schématiquement en vue de dessous le véhicule électrique de la figure 1 ;
- [Fig.3] représente schématiquement une vue de coupe transversale de la partie basse du véhicule électrique de la figure 1, illustrant le pack batterie et le système de protection qui est placé dessous ;
- [Fig.4] représente schématiquement une vue de coupe longitudinale du pack batterie et du système de protection placé dessous ;
- [Fig.5] montre en vue de perspective un exemple de panneau de protection ;
- [Fig.6] illustre une coupe d'un exemple de moyen de liaison qui relie deux panneaux de protection adjacents ;
- [Fig.7] illustre en coupe un panneau de protection équipé d'un capteur de choc et d'un moyen de connexion électrique ;
- [Fig.8] illustre un empilage de panneaux de protection que l'on peut trouver dans le circuit logistique notamment dans le stockage ;
- [Fig.9] est analogue à la figure 4 et montre une vue de coupe longitudinale d'une variante du système de protection placé sous le pack batterie ;
- [Fig.10] illustre schématiquement un exemple de moyens de connexion reliant électriquement un panneau au panneau suivant, avec à gauche (10A) la partie comportant les douilles électriques femelles et à droite (10B) la partie comportant les broches électriques mâles ;
- [Fig.11] illustre schématiquement un autre exemple de moyens de connexion reliant électriquement un panneau au panneau suivant, avec à gauche (11A) la partie comportant les douilles électriques et à droite (11B) la partie comportant les broches électriques ;
- [Fig.12] illustre schématiquement un autre exemple de moyens de connexion où les panneaux de protection sont alimentés par un élément conducteur placé en fond de gorge de rail ;
- [Fig.13] illustre schématiquement une variante du système de protection dans laquelle la glissière est orientée dans le sens transversal du véhicule (au lieu de selon le sens longitudinal comme dans l'exemple présenté aux figures 2 à 4).

Sur les différentes figures, les mêmes références désignent des éléments identiques ou similaires. Pour des raisons de clarté de l'exposé, certains éléments ne sont pas nécessairement représentés à l'échelle.

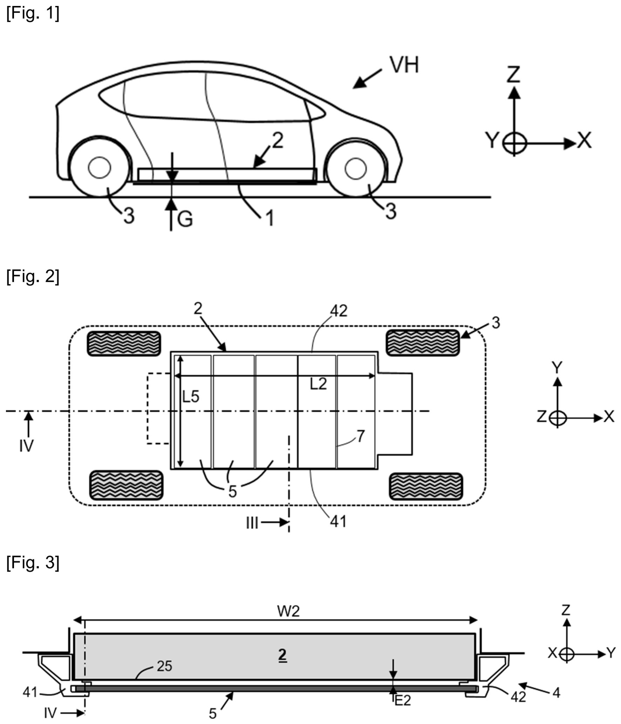

La figure 1 montre un véhicule électrique ou hybride **VH,** équipé d'une chaîne de traction électrique comprenant un pack batterie principal **2** situé sous le plancher structurel du véhicule.

On parle de pack batterie principal car il n'est pas exclu que le véhicule comprenne une autre batterie auxiliaire située dans une autre partie du véhicule.

On remarque que l'invention vise tout type de véhicules automobiles, les véhicules en question pouvant être des véhicules particuliers, des véhicules utilitaires, des fourgons, des véhicules de loisirs.

La batterie est hébergée dans un carter de batterie qui forme la structure du pack batterie. La paroi inférieure 25 du pack batterie fait aussi office de plaque de refroidissement ('cooling plate').

L'invention propose un système de protection placé sous la batterie le système de protection étant repéré généralement par la référence 1.

On note qu'il reste une garde au sol classique repérée G, c'est-à-dire exprimé autrement la présence du système de protection ne vient pas empiéter sur la garde au sol G du véhicule.

Sur les figures, le véhicule et sa batterie sont repérés par rapport à un repère orthogonal suivant : la direction verticale est notée Z, la direction horizontale dite longitudinale est notée X, la direction horizontale dite transversale est notée Y.

On a représenté aux figures un pack batterie 2 qui occupe une partie significative sous la caisse du véhicule dans le quadrilatère entre les quatre roues 3. On parle en pratique d'une surface d'au moins 2 m² voire d'au moins 3 m², sans que ces valeurs ne soient limitatives.

Afin de recouvrir par le dessous et protéger une telle surface de pack batterie, le système de protection proposé ici comprend avantageusement une pluralité de panneaux de protection.

Dans l'exemple représenté aux figures, la surface rectangulaire principale de la protection a une longueur **L2** et une largeur **L5.** La surface rectangulaire principale est couverte par cinq panneaux de protection **5.** Bien entendu il pourrait y avoir plus de cinq panneaux de protection ou moins de cinq panneaux de protection.

La longueur **L2** du pack batterie est comprise typiquement entre 120 cm et 200 cm, sans que ces valeurs ne soient limitatives.

Les panneaux de protection sont agencés l'un à la suite de l'autre le long de la direction longitudinale **X**. En outre, deux panneaux adjacents sont reliés entre eux par des moyens de liaison qui seront discutés plus loin.

Dans l'exemple illustré, les panneaux sont repérés **P1,P2,P3,P4** et **P5.** Il faut remarquer que pour la présente description, le premier panneau P1 peut être du côté avant du véhicule ou peut être du côté arrière du véhicule.

Chaque panneau de protection 5 présente une épaisseur E5. L'épaisseur E5 est comprise typiquement entre 1 mm et 20 mm selon la solution de matériau utilisée. Si le panneau est fait d'une tôle métallique, son épaisseur peut aller de 1 mm à 2 mm. Si le panneau est fait d'un polymère synthétique (par exemple polypropylène ou polyéthylène) son épaisseur peut aller de 5 mm à 12 mm.

Selon un exemple particulièrement pertinent, le panneau 5 est fait en composite avec une feuille en acier et une couche de polymère, ce composite

La feuille d'acier est placée dessous et dirigée vers le bas, elle fait face à la route, la couche de polymère est dirigée à l'inverse vers le pack batterie. La couche de polymère contribue à la rigidité structurelle souhaitée visant à limiter les phénomènes de flèche et éviter les vibrations et les bruits.

Les valeurs d'épaisseur susmentionnées ne sont pas limitatives.

L'épaisseur E5 est de l'ordre de 5 mm à 10 mm. Le panneau de protection peut présenter une épaisseur constante ou alternativement le panneau peut comporter des nervures de renfort qui font saillie d'un panneau de protection. Dans la position normale sous le véhicule, l'épaisseur E5 s'étend le long de la direction verticale Z du véhicule.

Le panneau de protection présente une longueur L5 correspondant généralement à la largeur W2 du pack batterie, qui s'étend selon la direction transversale Y lorsque le panneau de protection est dans sa position normale sous le véhicule.

Le panneau de protection 5 présente une largeur W5 qui s'étend selon la direction longitudinale X lorsque le panneau de protection est dans sa position normale sous le véhicule.

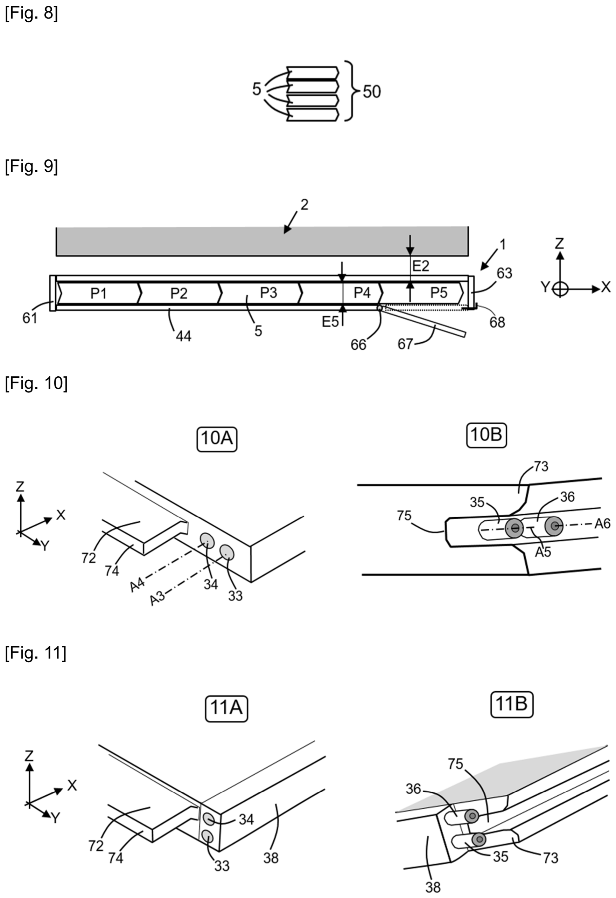

Astucieusement, la largeur W5 est comprise entre 20 cm et 50 cm, ce qui permet d'avoir un facteur de forme qui favorise un stockage compact de plusieurs panneaux l'un sur l'autre comme représenté à la figure 8. On remarque qu'un panneau peut être aussi stocké en posture debout avec une emprise au sol E5 x W5 bien en deçà de sa longueur L5 ou de la longueur d'une plaque de protection qui serait intégrale d'un seul tenant sous tout le pack batterie comme dans l'art connu.

Comme illustré schématiquement à la figure 8, l'ensemble des panneaux de protection 50 utilisé pour former un système de protection peut être empilé les uns sur les autres en occupant un volume de stockage limité.

La longueur L5 est comprise entre 100 cm et 200 cm, de préférence comprise entre 120 cm et 180 cm, en cohérence avec W2.

Le panneau de protection 5 comprend deux grandes faces 52, 56 deux tranches longitudinale 53, 54, et deux petites tranches 51.

L'intervalle E2 laissé libre entre le dessus des panneaux de protection 5 et le dessous du pack batterie peut être compris 5 mm à 15 mm.

Selon une réalisation alternative, l'intervalle E2 peut être nul, c'est-à-dire que les panneaux de protection 5 sont alors au contact du dessous du pack batterie.

Comme visible aux figure 2 et 3, les panneaux de protection sont maintenus en place au moyen de deux rails latéraux, un rail latéral gauche et un rail latéral droit.

Le rail latéral gauche forme un premier rail 41 et un rail latéral droit forme un deuxième rail 42. Les deux rails sont à distance l'un de l'autre séparé généralement par une distance W2 qui est généralement voisine de la longueur L5 des panneaux de protection.

Les deux rails sont ouverts l'un vers l'autre. Chaque rail est formé comme un profilé extrudé qui s'étend parallèlement à X. Les rails peuvent être fabriqué par extrusion de matière aluminium.

La section du profilé présente une gorge en U, avec un fond et avec l'ouverture dirigée selon Y. Les deux rails forment ainsi une glissière 4 selon la direction longitudinale. La glissière reçoit les panneaux de protection 5 qui peuvent coulisser le long de l'axe longitudinal X. La glissière reçoit deux bords opposés des panneaux de protection 5. En l'occurrence plus précisément, chacune des deux petites tranches 51 d'un panneau est reçue respectivement dans le premier rail 41 et dans le deuxième rail 42

La distance qui sépare les deux fonds de gorge est légèrement supérieur à L5 et correspond à la longueur L5 à laquelle on ajoute un petit jeu fonctionnel (qqs mm).

Il est prévu un support ou lèvre inférieure 44 et un support ou lèvre supérieure 45 qui encadrent ensemble les bordures d'extrémités 51 de longueur des panneaux de protection 5. La lèvre inférieure 44 et la lèvre supérieure 45 peuvent encadrent les bords de panneaux, respectivement par le bas et le haut, avec un jeu minime qui facilite coulissement des panneaux. Il peut être prévu des reliefs locaux en surface, par exemple des picots, pour annuler le jeu et éviter tout battement potentiellement source de bruit.

Les deux rails peuvent être fixés à un élément de la caisse du véhicule comme illustré à la figure 3. Les rails peuvent alors être démontés sans toucher au pack batterie.

Alternativement, les deux rails peuvent être fixés au carter de batterie. On peut démonter ainsi le tout comme un ensemble

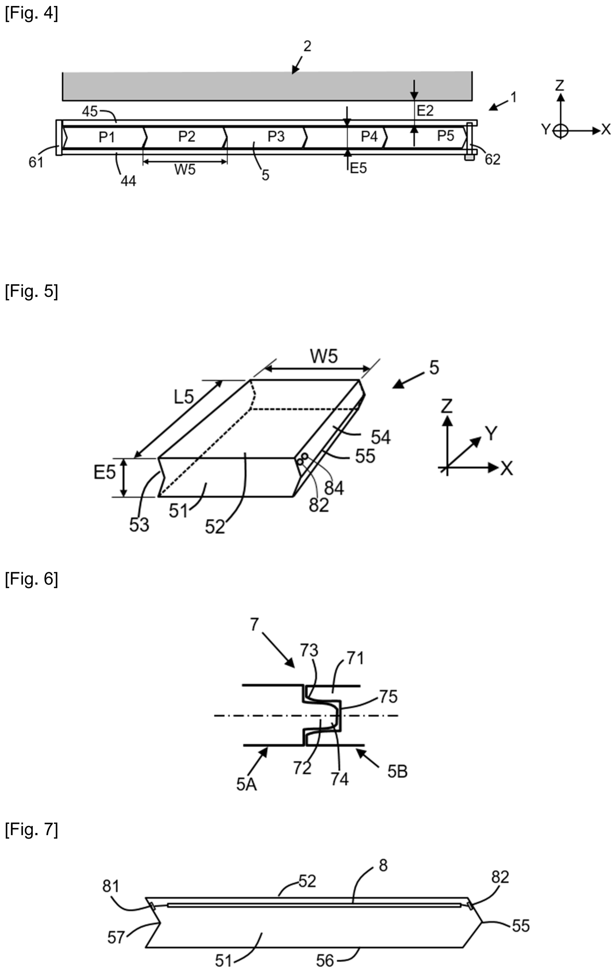

Comme visible à la figure 4, il est prévu à une première extrémité longitudinale de la glissière une butée fixe 61 pour stopper la translation longitudinale d'un premier panneau de protection P1, et il est prévu à l'autre extrémité longitudinale de la glissière, un système de butée amovible 62 qui permet de stopper la translation longitudinale d'un dernier panneau de protection P5.

Dans cette configuration, les panneaux sont introduits selon la direction longitudinale X depuis l'extrémité où se trouve la butée amovible.

Comme visible à la figure 9, à l'endroit d'une extrémité longitudinale d'un rail, une partie du support inférieur du rail notée **67** est déplaçable soit par rotation grâce à une charnière **66** soit purement démontable.

Dans la configuration de la figure 9, les deux butées extrêmes 61,63 selon la direction longitudinale peuvent être des butées fixes, l'accès au panneau de protection se faisant par le dessous. L'accès au panneau de protection 5 par le dessous peut être situé du côté avant du véhicule ou du côté arrière du véhicule.

Ces butées peuvent être une paroi complète ou des éléments d'arrêt discrets.

Dans ce cas, le panneau de protection qui se trouve à cet endroit peut être abaissé du côté où le rail n'est plus complet, et le panneau de protection peut être dégagé du rail de l'autre côté.

Bien entendu, il est prévu des moyens de liaison 68 pour maintenir l'élément déplaçable dans sa position normale pour l'utilisation du véhicule, par exemple de type vis, cheville, goupille ou tout autre moyen de liaison ou de maintien.

Une des butées peut comprendre un moyen élastique pour créer une contrainte résiduelle dans le sens de la glissière (X ici) pour plaquer les tranches des panneaux les unes contre les autres et ainsi éviter tout mouvement relatif.

### Moyens de liaison

Dans l'exemple illustré aux figures 4 et 5, les moyens de liaison 7 sont formés d'un côté par une forme convexe avec un sommet 55, et du côté opposé par une forme concave complémentaire avec un fond de sillon 57 dans lequel vient se loger le commet 55 du panneau en vis-à-vis.

Exprimé généralement, les panneaux 5 s'emboitent les uns dans les autres par les longues tranches.

Dans l'exemple illustré aux figures 5, 10 et 11, les moyens de liaison 7 sont formés d'une part par une section **femelle 71** sur l'une des tranches longitudinales 5B d'un panneau de protection et d'autre part sur la tranche longitudinale 5A en vis-à-vis d'un autre panneau de protection par une section mâle 72.

Deux nervures 73 de la section femelle encadrent une nervure 74 de la section mâle, cette interface permet une transmission des efforts ce qui participe à la rigidité générale. Il peut être prévu des chanfreins d'entrée pour faciliter l'accostage et l'accouplement.

L'extrémité libre avant de la nervure mâle via contacter le fond de rainure 75 interposé entre les nervures 73 de la section femelle.

De façon générique, les moyens de liaison peuvent être formés par des bords bouvetés. Autrement dit, toute forme de bouvetage qui puisse former un moyen de liaison entre deux panneaux adjacents 5 peut être utilisé dans le cadre de la présente invention.

### Capteur et connectivité

Selon une option avantageuse, au moins un panneau de protection contient un capteur de choc 8 apte à détecter un choc d'une intensité supérieure à un seuil prédéterminé ou apte à détecter un taux de déformation supérieur à un seuil prédéterminé.

Selon une autre option avantageuse, tous les panneaux de protection contiennent individuellement un capteur de choc apte à détecter un choc d'une intensité supérieure à un seuil prédéterminé.

Il est prévu que les capteurs de choc puissent délivrer une information qui est mise à disposition pour un utilisateur. L'utilisateur en question peut être le conducteur du véhicule, le personnel de maintenance en garage, le propriétaire ou le gestionnaire de flotte. Ceci permet de prévoir ou planifier une inspection du dessous du véhicule en vue d'une réparation ou d'une présentation à un contrôle technique réglementaire.

Selon une disposition avantageuse, dans le cas où chacun des panneaux contient individuellement un capteur de choc il est possible de déterminer quel panneau a été endommagé par un choc et donc de proposer le remplacement de ce panneau en particulier en conservant les autres panneaux.

Concernant la technologie du capteur, le capteur de choc peut être un capteur capacitif, un capteur piézo-résistif, ou tout autre type de capteur capable de détecter soit une accélération soit une déformation dans le sens de l'épaisseur du panneau.

Le capteur de choc 8 se présente comme une nappe de captage. La nappe peut être située plutôt vers la face inférieure du panneau 56, ou dans l'épaisseur à mi-hauteur, ou plutôt vers la face supérieure 52 du panneau, ou encore la nappe peut être formée comme la couche supérieure externe du panneau.

Chaque panneau de protection équipé d'un capteur comprend au moins un moyen de connexion électrique, avec au moins deux voies **81,82,84.**

Selon une première possibilité, il est prévu un connecteur spécifique sur chaque panneau reliant directement deux panneaux adjacents. Dans l'exemple illustré aux figures 10 et 11, chacun des panneaux comprend d'un côté deux douilles femelle 33, 34 et de l'autre côté, en correspondance de position transversale, deux broches mâles 35 ,36. Lorsque deux panneaux adjacents sont emboîtés par les moyens de liaison mécanique, les deux voies électriques sont aussi établies par l'accouplement des broches dans les douilles (axes A3 sur A5 et axe A4 sur A6).

Le système comprend ainsi un circuit général en guirlande avec les panneaux en mode série. Il est prévu un boîtier d'alimentation configuré pour délivrer une alimentation électrique vers les panneaux à une tension qui peut être 12 volts, voire régulée à 5 volts, sans exclure d'autres possibilités.

On remarque que à la figure 10 les broches se trouvent à l'intérieur de la rainure femelle des moyens de liaison mécanique ce qui permet de procurer une protection adéquate des broches qui ne sont ainsi pas protubérantes.

La solution illustrée à la figure 11 consiste à utiliser une barrette d'équipement électrique 38 agencée sur le bord du panneau de protection de base, et c'est la barrette d'équipement électrique 38 qui comporte d'un côté les douilles et du côté opposé les broches.

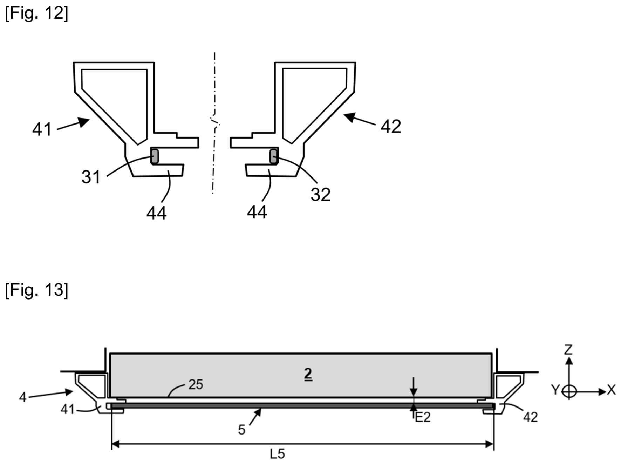

Selon une seconde possibilité, les moyens de connexion électrique utilisent les rails latéraux, avec un élément conducteur en fond de gorge qui est contacté par un patin frottant de la tranche de panneau. Les panneaux sont alors alimentés électriquement en mode parallèle. En pratique, comme illustré à la figure 12, un premier élément conducteur partiellement gainé 31 se trouve dans le fond de gorge du premier rail 41 et un deuxième élément conducteur partiellement gainé 32 se trouve en fond de gorge dans le deuxième rail 42.

Dans cette configuration, même si un panneau de protection souffre d'une rupture grave affectant notamment son circuit électrique, les panneaux voisins continuent d'être alimentés électriquement.

Les rails de la glissière sont raccordés électriquement à la masse du véhicule. Dès lors, on peut utiliser un contact avec un rail pour fournir l'alimentation négative aux panneaux. Les deux voies électriques spécifiques sont alors respectivement dédiées à l'alimentation positive et à la voie de signal de données (bus série de type LIN ou autre).

Selon une réalisation, le capteur de choc comprend un circuit capable de transmettre des messages par ondes électromagnétiques vers une unité de réception (non visible aux figures) ; on peut utiliser un système de réseau local comme le Wifi^{™} ou le Bluetooth^{™} pour supporter la communication sans fil entre les capteurs de choc et l'unité de réception.

L'unité de réception peut être combiné avec le boîtier d'alimentation délivrant la tension aux panneaux.

### Variante en Y

Dans cette variante, la glissière 4 est orientée dans le sens transversal du véhicule Y. La longueur des panneaux de protection L5 peut être assez conséquente si on couvre la batterie en une seule travée. Cette longueur peut être voisine de 200 cm voire plus.

Il n'est pas exclu d'avoir deux glissières côte-à-côte, une devant et l'autre derrière, chacune orientée le long de Y afin de couvrir une distance importante en X.

Dans cette variante, les moyens de liaison et la fonction de captation de choc peuvent être identiques ou similaires à ce qui a été décrit précédemment.

Selon un avantage particulier, lié à la dépose et au remontage, il peut être possible, pour retirer les panneaux de protection, de les faire coulisser pour les extraire de la glissière linéairement à l'horizontale sur le côté du véhicule, après avoir ôté la butée mobile ; la glissière est alors simplifiée.

L'utilisation d'un support inférieur du rail déplaçable reste toutefois possible

## Revendications

1. Système de protection sous caisse, destiné à protéger un pack batterie (2) de véhicule électrique vis-à-vis d'impacts éventuels d'objets par le dessous du véhicule,
le système de protection et le véhicule étant situés dans un repère spatial orthogonal comprenant une direction verticale (Z), une direction longitudinale (X) et une direction transversale (Y),
le système de protection comprenant un premier rail (41) et un deuxième rail (42), les deux rails étant à distance et ouverts l'un vers l'autre, les deux rails formant ainsi une glissière selon la direction longitudinale (X) ou selon la direction transversale (Y),
**caractérisé en ce que** le système de protection comprend une pluralité de panneaux de protection (5), reçus dans la glissière, et agencés l'un à la suite de l'autre le long de la glissière, deux panneaux adjacents étant reliés entre eux par des moyens de liaison (7).

2. Système de protection selon la revendication 1, dans lequel chaque panneau de protection présentant une épaisseur (E5) le long de la direction verticale, une longueur (L5) correspondant généralement à la largeur du pack batterie, et une largeur (W5) comprise entre 15 cm et 60 cm, de préférence comprise entre 20 cm et 50 cm.

3. Système de protection selon la revendication 2, dans lequel la longueur (L5) est comprise entre 100 cm et 200 cm, de préférence comprise entre 120 cm et 180 cm.

4. Système de protection selon l'une quelconque des revendications 1 à 3, dans lequel les moyens de liaison (7) sont formés par une section femelle sur l'une des tranches longitudinales du panneau de protection et par une section mâle sur l'autre des tranches longitudinales du panneau de protection.

5. Système de protection selon l'une quelconque des revendications 1 à 4, dans lequel au moins un panneau de protection contient un capteur (8) apte à détecter un choc d'une intensité supérieure à un seuil prédéterminé.

6. Système de protection selon la revendication 5, dans lequel chaque panneau de protection équipé d'un capteur comprend au moins un moyen de connexion électrique, avec au moins 2 voies.

7. Système de protection selon l'une quelconque des revendications 1 à 6, dans lequel au moins un des deux rails comprend un support inférieur (44) déplaçable pour laisser un passage vers le bas afin de pouvoir insérer ou retirer un panneau de protection.

8. Système de protection selon l'une quelconque des revendications 1 à 7, dans lequel les panneaux de protection (5) sont fabriqués en composite avec une feuille en acier une couche de polymère.

9. Système de protection selon l'une quelconque des revendications 1 à 8, dans lequel il est prévu à une première extrémité longitudinale de la glissière une première butée (61) pour stopper la translation longitudinale d'un premier panneau de protection (P1), et il est prévu à l'autre extrémité longitudinale de la glissière, une deuxième butée (62) qui permet de stopper la translation longitudinale d'un dernier panneau de protection (P5).

10. Véhicule (VH) comprenant un pack batterie (2) et un système de protection (1) sous caisse selon l'une quelconque des revendications 1 à 9.
